# EUROPÄISCHE PATENTSCHRIFT

(11) **EP 1 375 225 B1**
(45) Veröffentlichungstag und Bekanntmachung des Hinweises auf die Patenterteilung: **01.03.2006**
(21) Anmeldenummer: 03013845.7
(22) Anmeldetag: 18.06.2003
(51) Int. Cl.: B60J 10/00, B60J 10/12

(54) **Klebeband zur Befestigung eines Dichtungselementes, und Verfahren zur Herstellung und zur Befestigung des Dichtungselementes**
Adhesive tape for fixing a sealing element, and methods for producing and fixing the sealing element
Bande adhésive pour fixation d'un joint d'étanchéité, et méthodes pour la production et la fixation du joint d'étanchéité

(30) Priorität: 26.06.2002 DE 10228614
(43) Veröffentlichungstag der Anmeldung: 02.01.2004
(73) Patentinhaber: Webasto AG, 82131 Stockdorf (DE)
(72) Erfinder: Hahn, Roland, 82110 Germering (DE)

(56) Entgegenhaltungen:
- WO-A-99/26801
- DE-A- 4 214 489
- DE-A- 19 952 399

## Beschreibung

Die vorliegende Erfindung betrifft ein Klebeband gemäß dem in der DE 19952399 offenbarten Merkmalen des Oberbegriffs von Anspruch 1, ein Verfahren zur Herstellung eines Dichtungselementes ein verfharen zur Befestigung eines Dichtungselementes an einer Verwendungsstelle unter Verwendung eines Silikonklebers welches Dichtungselement einen Dichtungskörper, bestehend aus Silikon, und ein Klebeband umfasst.

Im Automobilbereich sind Silikondichtungen bekannt, welche mit einem Steckfuß versehen sind, mittels welchem Sie an der Verwendungsstelle eingesteckt werden können. Diese Befestigungsart bringt jedoch einen hohen Fertigungs- und Bauraumbedarf mit sich und ist insofern von Nachteil.

Aus der Deutschen Patentanmeldung DE 199 52 399 ist ferner eine Silikondichtung bekannt, die mittels eines flüssigen Silikonklebers an einem einseitig wirkenden Klebeband befestigbar ist, dessen zunächst von einer Schutzfolie abgedeckte äußere Klebefläche nach Abziehen der Schutzfolie zur Befestigung an einer Verwendungsstelle dient. Die mehrere Stunden lange Aushärtezeit des flüssigen Silikonklebers erschwert eine prozesssichere Anwendung in einer auf einen schnellen Durchsatz ausgelegten Massenproduktion. Ein weiterer Nachteil dieser Silikondichtung wird darin gesehen, dass durch die Verwendung des flüssigen Silikonklebers eine weichelastische Verbindung zwischen dem Trägerelement und dem Dichtungskörper des Dichtungselementes erfolgt, da die flüssigen Silikonkleber als dauerklebrige Klebstoffe zu einer reversiblen Klebeverbindung führen, welche unter bestimmten Beanspruchungsbedingungen zu einer Beeinträchtigung der Dichtungswirkung, beispielsweise beim Einsatz in Fahrzeugschiebedächern führt.

Durch die weichelastische Verbindung kann es zu einer Verschiebung bis hin zum Ablösen des Dichtungskörpers kommen, so dass eine störungsfreie Funktion eines Fahrzeugschiebedaches nicht gewährleistet ist.

Aus der DE 94 17 149 U1 ist ein Dichtungselement mit einem Dichtungskörper aus elastischem Material bekannt, welches eine Klebefläche aufweist, mittels welcher es an der Unterseite des Deckels eines Schiebedaches, Hebedaches usw. befestigt wird. Die Klebefläche ist an einem Klebeband ausgebildet, welches mit seiner Rückseite an einem Grundkörper befestigt ist, der mit dem Dichtungskörper verbunden ist und aus einem steiferen Material als der Dichtungskörper besteht. Vor dem Befestigen der Dichtung ist die Klebefläche mit einer abziehbaren Schutzfolie geschützt.

Weitere Dichtungselemente sind aus der DE 197 20 713 C1 und EP 0 357 973 B1 bekannt, wobei dabei als bevorzugtes Material für den Dichtungskörper Ethylen-Propylen-Kautschuk (EPDM) genannt ist. Dieses Material ist jedoch hinsichtlich seiner Temperaturbeständigkeit, dem Rückstellverhalten, den Dichteigenschaften und der Anfrier- bzw. Verklebegefahr nicht optimal geeignet.

Es ist Aufgabe der vorliegenden Erfindung, ein Klebeband und ein Verfahren zur Herstellung und zur Befestigung eines Dichtungselementes mit einem Dichtungskörper, bestehend aus Silikon, an einer Verwendungsstelle zu schaffen, mittels dem eine kostengünstige und wirtschaftliche Herstellung einer schnellen und vereinfachten sowie prozesssicheren Klebeverbindung an der Verwendungsstelle ermöglicht wird.

Diese Aufgabe wird erfindungsgemäß bezüglich des Klebebandes durch die Merkmale des Patentanspruches 1, bezüglich des Verfahrens zur Befestigung durch die Merkmale des Patentanspruches 12 und bezüglich des Verfahrens zur Herstellung durch die Merkmale des Patentanspruchs 21 gelöst. Vorteilhafte Ausgestaltungen der Erfindung sind den jeweiligen Unteransprüchen zu entnehmen.

Durch eine haftvermittelnde Schicht zwischen einer Klebefläche eines Silikonklebers und dem bevorzugt aus Acrylatschaum bestehenden Trägerelement wird eine einfache, rasche und sichere Möglichkeit einer Befestigung eines solchen Klebebandes auf einer Gegenfläche aus Silikon ermöglicht.

Ein weiterer Vorteil wird darin gesehen, dass der zwischen dem Trägerelement und dem Dichtungskörper eingebrachte Silikonkleber, unterstützt durch die haftvermittelnde Schicht eine stoff- und kraftschlüssige Verbindung ermöglicht, welche durch das Vernetzen bzw. Ausvulkanisieren dieses Silikonklebers entsteht.

Bevorzugt können dabei Teilbereiche der ersten Klebefläche mit einem schneller aushärtenden Kleber, beispielsweise einem Acrylatkleber, versehen sein, der beim Anbringen der ersten Klebefläche auf einer Gegenfläche aus Silikon zunächst für eine vorläufige Fixierung sorgt, während der Silikonkleber in den übrigen Bereichen noch zur Herstellung der Betriebsfestigkeit vernetzt bzw. ausvulkanisiert.

Alternativ dazu kann die erste Klebefläche auch eine Mischung aus Silikonkleber und einem anderen Kleber, wie beispielsweise Acrylatkleber, enthalten.

Dadurch, dass beim erfindungsgemäßen Verfahren zum Befestigen des Dichtungselementes auf den Dichtungskörper zunächst eine einen Silikonkleber aufweisende erste Klebefläche eines doppelseitigen Klebebandes aufgebracht wird, wird das Dichtungselement derart vorbereitet, dass es nach Abziehen einer Schutzfolie mit seiner zweiten selbstklebenden Klebefläche, deren Kleber bevorzugt an die Eigenschaften der entsprechenden Verwendungsstelle angepasst ist, leicht und schnell an der Verwendungsstelle, beispielsweise an einer Kante eines Schiebedachdeckels oder an einem einen solchen umgebenden Öffnungsrand, befestigt werden kann.

Bei der erfindungsgemäßen Lösung ist es vorteilhaft, dass der Dichtungskörper, bestehend aus einem Silikon, hervorragende Eigenschaften hinsichtlich Temperaturbeständigkeit, Rückstellverhalten, Dichtheit und Schutz vor Anfrier- und Verklebungsgefahr aufweist und dennoch das Dichtungselement rasch, einfach und mit geringem Bauraumbedarf an der Verwendungsstelle angebracht werden kann, während beispielsweise bei direkter Verklebung des Dichtungskörpers an der Verwendungsstelle mittels Silikonkleber aufgrund der dadurch bedingten langen Aushärtezeit keine Verwendung in der Serienproduktion möglich ist.

Die Erfindung überwindet ein Vorurteil der Fachwelt, gemäß dem die Vorteile einer Silikondichtung nicht mit einer einfachen Montage unter Verwendung einer an der Dichtung vorgesehenen selbstklebenden Klebefläche vereinbar seien. Durch die Verwendung einer haftvermittelnden Schicht und eines vernetzenden bzw. ausvulkanisierenden Silikonklebers ist es überraschend möglich, eine stoff- und kraftschlüssige Verbindung zwischen dem Dichtungskörper und dem Klebeband sowie der Verwendungsstelle herzustellen, die keine weichelastischen Eigenschaften aufweist und die ebenfalls keine zusätzlichen Aushärtezeiten erforderlich macht.

In bevorzugter Ausgestaltung der Erfindung wird die zweite Klebefläche beispielsweise von einem Acrylatklebstoff gebildet. Besonders bevorzugt wird dabei das Trägerelement aus einem Acrylat-Schaum gebildet, der einen Acrylat-Kleber enthält und somit selbst unmittelbar die zweite, der Verwendungsstelle zugewandte Klebefläche bildet. Ferner ist die Klebefläche vorzugsweise planar ausgebildet.

Zwischen der ersten und der zweiten Klebefläche des Klebebandes ist ein Trägerelement vorgesehen, das vorzugsweise von einem Acrylat-Schaum gebildet wird. Die Klebefläche erstreckt sich bevorzugt im Wesentlichen über die gesamte Länge des Dichtungskörpers. Gemäß einer alternativen Ausführungsform wird das Trägerelement von einem flexiblen Band gebildet.

Die Herstellung des erfindungsgemäßen Dichtungselementes, welches einen Dichtungskörper, bestehend aus Silikon, aufweist, erfolgt dadurch, dass in einem ersten Verfahrensschritt der Dichtungskörper, bestehend aus Silikon, durch das Extrusionsverfahren kontinuierlich hergestellt wird und dass in einem zweiten Verfahrensschritt das Klebeband mit einem Silikonkleber zumindest teilweise beschichtet wird.

In einem dritten Verfahrensschritt wird der Dichtungskörper und das Klebeband über den die erste Klebefläche bildenden Silikonkleber und die haftvermittelnde Schicht miteinander verbunden und in einem vierten Verfahrensschritt erfolgt das Vernetzen des die Klebefläche bildenden Silikonklebers durch Temperatur- und/oder Druck- und/oder Feuchtigkeitseinwirkung.

Durch dieses erfindungsgemäße Verfahren ist es möglich, über die Parameter der Temperatur und des Druckes die Zeit des Vernetzens bzw. Ausvulkanisierens des die Klebefläche bildenden Silikonklebers kontrolliert zu steuern, so dass das erfindungsgemäße Dichtungselement bei der Befestigung an der Verwendungsstelle immer eine stoff- und kraftschlüssige Verbindung zwischen dem Dichtungskörper und dem Klebeband aufweist.

Bei Verwendung eines Trägerelements aus einem Acrylat-Schaum wird zwischen der dem Dichtungselement zugewandten Klebefläche aus Silikonkleber und dem Trägerelement in einem Zwischenschritt die haftvermittelnde Schicht, wie beispielsweise ein Primer, ein Lack, ein Klebstoff, eine Folie, ein vorzugsweise auf den Acrylat-Schaum auflaminiertes Gewebeband oder eine durch Korona-Behandlung erzeugte Oberfläche des Acrylat-Schaums aufgebracht.

Es wurde weiterhin vorteilhaft festgestellt, dass durch die gezielte Einwirkung von Feuchtigkeit auf dem zu vernetzenden, die erste Klebefläche bildenden Silikonkleber, ein weiterer Einflussparameter besteht, der die stoff- und kraftschlüssige Verbindung zwischen dem Dichtungskörper und dem doppelseitigen Klebeband positiv beeinflusst.

Im Folgenden ist eine beispielshafte Ausführungsform der Erfindung anhand der beigefügten Zeichnungen beispielhaft näher erläutert. Es zeigt:
- Fig. 1: eine schematische perspektivische Ansicht eines Fahrzeugdaches mit einem öffnungsfähigen Deckel,
- Fig. 2: einen Querschnitt durch ein an einem Deckelrand anzubringendes Dichtungselement,
- Fig. 3: einen Querschnitt durch ein an einem Dachrahmen angeordnetes Dichtungselement, und
- Fig. 4: einen Querschnitt durch einen alternativen Aufbau eines Klebebandes mit einem Acrylat-Schaum als Trägerelement.

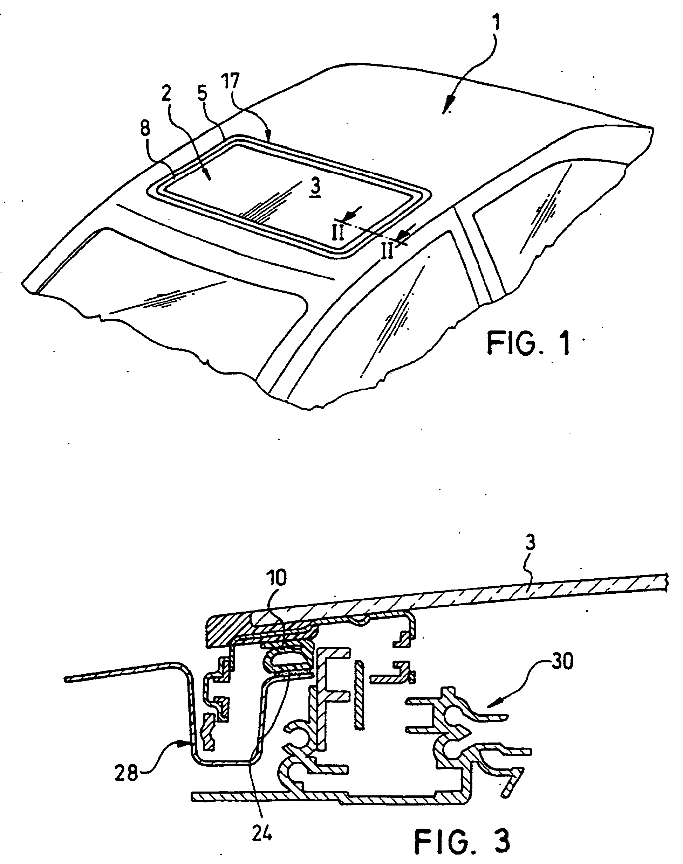

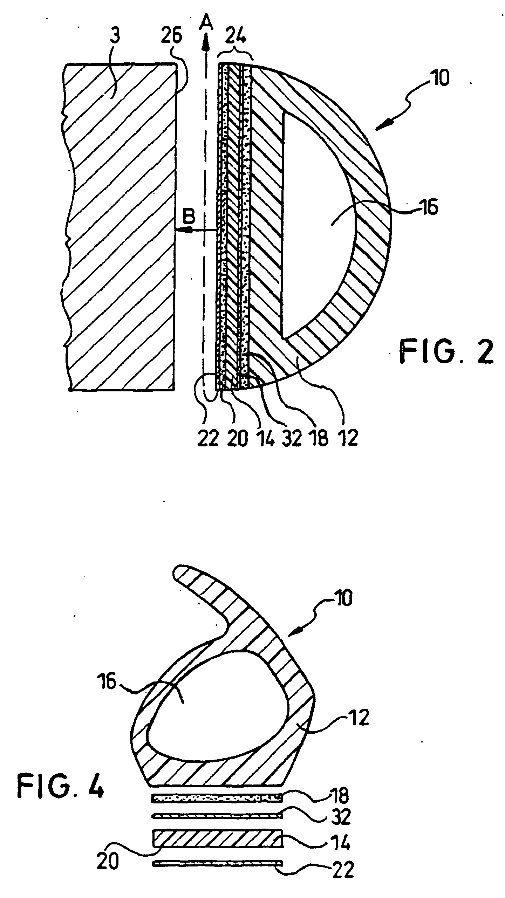

Fig. 1 zeigt ein öffnungsfähiges Fahrzeugdach 1, bei dem eine Dachöffnung 2 mittels eines Deckels 3 wahlweise verschließbar oder zumindest teilweise freigebbar ist. Zur Abdichtung zwischen dem Deckel 3, dessen Außenkante in Fig. 2 mit 26 bezeichnet ist und dem Öffnungsrand 17 der Dachöffnung 2 ist entweder eine Dichtung 8 an der Außenseite 26 des Deckels 3, wie in Fig. 2 gezeigt, oder eine Dichtung 5 am Öffnungsrand 17 der Dachöffnung 2 angeordnet.

Fig. 2 zeigt ein Dichtungselement 10, das beispielsweise als Dichtung 5 oder Dichtung 8 gemäß Fig. 1 einsetzbar ist. Das Dichtungselement 10 wird von einem Dichtungskörper 12, der bevorzugt aus einem langgestreckten Extrusionsprofil aus Silikon besteht und einer an diesem Extrusionsprofil ausgebildeten Hohlkammer 16, gebildet. Der Dichtungskörper 12 ist an seiner Unterseite über die ganze Länge und Breite planar ausgebildet.

An dem Dichtungselement 10 wird ein Klebeband 24 mit einer ersten Klebefläche 18 befestigt, die sich dadurch auszeichnet, dass sie einen Silikonkleber aufweist, der aufgrund der geringen Schichtstärke und der Vernetzung eine feste Verbindung mit der Unterseite des Dichtungskörpers 12 eingeht.

Ein derartiges Klebeband 24 ist jedoch auch hervorragend zur Verwendung an anderen Einsatzstellen geeignet, an denen die positiven Eigenschaften des Sili kons unmittelbar zum Tragen kommen sollen. Insbesondere ist in diesem Zusammenhang auch an Abdichtungen an oder in Gebäuden zu denken.

Das Klebeband 24 umfasst ein sich an die erste Klebefläche 18 anschließendes flexibles Trägerelement 14, Das vorzugsweise aus einem Acrylat-Schaum bestehende Trägerelement 14 ist mittels der Klebefläche 18 aus Silikonkleber über die ganze Länge und Breite an der Unterseite des Dichtungskörpers 12 stoff- und kraftschlüssig angeklebt. An der von dem Dichtungskörper 12 abgewandten Seite des Trägerelementes 14 ist das Klebeband 24 mit einer zweiten selbstklebenden Klebefläche 20 versehen, die zum Befestigen des Dichtungselementes 10 an der Verwendungsstelle dient.

Die Klebefläche 20 ist vor dem Befestigen des Dichtungselementes 10 an der Verwendungsstelle von einer Schutzfolie 22 geschützt, die dann bei der Montage abgezogen wird. Das Abziehen der Schutzfolie 22 ist durch den Pfeil A und das anschließende Zusammenfügen des Dichtungselementes 10 über das Klebeband 24 durch den Pfeil B angedeutet. Das Material der Klebefläche 20 wird in Abhängigkeit von dem Haftgrund an der Verwendungsstelle gewählt, wobei, insbesondere bei Verwendung eines Acrylat-Schaums als Trägerelement 14 vorzugsweise ein Acrylatklebstoff verwendet wird. Die Klebefläche 20 erstreckt sich vorzugsweise über die gesamte Länge und Breite der Unterseite des Klebebandes 24 und ist im Wesentlichen planar ausgebildet.

Das beschriebene Dichtungselement 10 wird vorzugsweise zur Abdichtung des Deckels 3 eines öffnungsfähigen Fahrzeugdaches 1 verwendet, wie beispielsweise eines Schiebedachs, Hebedachs, Schiebe-/Hebedachs, Lamellendachs oder Spoilerdachs, wobei es beispielsweise als Dichtung 8 an der Seitenkante 26 oder auch an einer Unterseite des Deckels 3 oder als Dichtung 5 an einem Öffnungsrand 17 einer vom Deckel 3 verschließbaren Dachöffnung 2 befestigt werden kann.

Schließlich ist auch, wie in Fig. 3 gezeigt, eine Befestigung an einem horizontalen Flanschbereich eines Dachrahmens 28 möglich. In diesem Fall legt sich der Deckel 3 in geschlossenem Zustand von oben her dichtend an das Dichtungselement 10 an. Mit 30 ist eine Führungsschiene bezeichnet, die zur Führung der nicht dargestellten Ausstell- und Verschiebemechanik des Deckels 3 dient.

Bei der in Fig. 4 gezeigten Variante wird ein Trägerelement 14 aus Acrylat-Schaum verwendet, das auf eine Schutzfolie 22 aufgebracht wird. Der Acrylat-Schaum enthält einen Acrylat-Kleber, so dass die Unterseite des Trägerelements 14 nach Ablösen der Schutzfolie 22 unmittelbar als Klebefläche 22 an der Verwendungsstelle anzubringen ist. Auf die Oberseite des aus Acrylat-Schaum gebildeten Trägerelements 14 wird eine haftvermittelnde Schicht 32 aufgetragen, die zur Haftvermittlung zwischen dem Trägerelement 14 und der Klebefläche 18 aus Silikonkleber dient.

Die haftvermittelnde Schicht 32 wird beispielsweise von einem Primer, von einem Lack, von einem Klebstoff, von einer Folie, von einem vorzugsweise auf den Acrylat-Schaum auflaminierten Gewebeband oder von einer durch Korona-Behandlung erzeugten Oberfläche des Acrylat-Schaums gebildet.

Als Silikonklebstoff zur Herstellung der Klebefläche 18 ist beispielsweise der Werkstoff E 415 der Firma Wacker Chemie gut geeignet. Als Primer zur Herstellung der haftvermittelnden Schicht 32 ist beispielsweise der Werkstoff G 718 der Firma Wacker Chemie gut geeignet. Als Acrylat-Schaum mit integrierter Klebefläche aus Acrylat ist der Werkstoff Acrylic-Foam der Firma 3M sehr gut geeignet.

Die vorliegende Erfindung schafft ein Dichtungselement, welches gute Eigenschaften hinsichtlich Temperaturbeständigkeit, Rückstellverhalten, Dichteigenschaften, Anfrier- und Verklebegefahr aufweist und dennoch auf eine einfache und rasche Weise an der Verwendungsstelle befestigt werden kann, in dem weder Steckverbindungen, welche eine relativ großen Bauraum und Montageaufwand erfordern, noch flüssiger Silikonkleber, welcher eine lange Aushärtezeit mit sich bringt und der zu einer weichelastischen und damit reversiblen Klebeverbindung führt, verwendet werden.

### Bezugszeichenliste

- 1: Fahrzeugdach
- 2: Dachöffnung
- 3: Deckel
- 5: (fahrzeugseitige) Dichtung
- 8: (deckelseitige) Dichtung
- 10: Dichtungselement
- 12: Dichtungskörper (Profil)
- 14: Trägerelement
- 16: Hohlkammer
- 17: Öffnungsrand (von 2)
- 18: erste Klebefläche (aus Silikonkleber)
- 20: zweite Klebefläche
- 22: Schutzfolie
- 24: Klebeband
- 26: Seitenkante (von 3)
- 28: Dachrahmen
- 30: Führungsschiene
- 32: haftvermittelnde Schicht

## Patentansprüche

1. Klebeband (24) zur Befestigung eines Dichtungselementes (10) an einer Verwendungsstelle, mit einem zwischen zwei selbstklebenden Klebeflächen (18, 20) angeordneten Trägerelement (14), wobei das Dichtungselement (10) aus einem Silikon-Werkstoff besteht und die dem Dichtungselement (10) zugewandte Klebefläche (18) zumindest teilweise von einem Silikonkleber gebildet ist, **dadurch gekennzeichnet, dass** zwischen dieser Klebefläche (18) und dem Trägerelement (14) eine haftvermittelnde Schicht (32) angeordnet ist.

2. Klebeband nach Anspruch 1, **dadurch gekennzeichnet, dass** der Silikonkleber ein vemetzender Silikonkleber ist.

3. Klebeband nach Anspruch 1 oder 2, **dadurch gekennzeichnet, dass** die den Silikonkleber aufweisende Klebefläche (18) Teilbereiche mit einem anderen Kleber aufweist.

4. Klebeband nach einem der vorhergehenden Ansprüche, **dadurch gekennzeichnet, dass** das Trägerelement (14) von einem Acrylat-Schaum gebildet wird.

5. Klebeband nach Anspruch 4, **dadurch gekennzeichnet, dass** der Acrylat-Schaum des Trägerelementes (14) die der Verwendungsstelle zugewandte zweite Klebefläche (20) bildet.

6. Klebeband nach einem der vorhergehenden Ansprüche, **dadurch gekennzeichnet, dass** die haftvermittelnde Schicht (32) von einem Primer gebildet ist.

7. Klebeband nach einem der Ansprüche 1 bis 5, **dadurch gekennzeichnet, dass** die haftvermittelnde Schicht (32) von einer Folie gebildet wird.

8. Klebeband nach einem der Ansprüche 1 bis 5, **dadurch gekennzeichnet, dass** die haftvermittelnde Schicht (32) von einem Lack gebildet wird.

9. Klebeband nach einem der Ansprüche 1 bis 5, **dadurch gekennzeichnet, dass** die haftvermittelnde Schicht (32) von einem anderen Klebstoff gebildet wird.

10. Klebeband nach einem der Ansprüche 1 bis 5, **dadurch gekennzeichnet, dass** die haftvermittelnde Schicht (32) von einem auf das Trägerelement (14) auflaminierten Gewebeband gebildet wird.

11. Klebeband nach einem der Ansprüche 1 bis 5, **dadurch gekennzeichnet, dass** die haftvermittelnde Schicht (32) durch eine mittels Korona-Behandlung behandelte Oberfläche des Trägerelements (14) herstellbar ist.

12. Verfahren zur Befestigung eines Dichtungselementes (10) zur Verwendung in Fahrzeugen, welches Dichtungselement einen Dichtungskörper (12), bestehend aus Silikon, umfasst, wobei das Dichtungselement (10), welches den Dichtungskörper (12) verbunden, mit einer einen Silikonkleber aufweisenden ersten Klebefläche (18) eines doppelseitigen Klebebandes (24) aufweist, nach Abziehen einer Schutzfolie (22) mit einer zweiten selbstklebenden Klebefläche (20) des doppelseitigen Klebebandes (24) an der Verwendungsstelle befestigt wird, wobei zwischen der ersten Klebefläche (18) und einem zwischen der zwei Klebflächen angeordneten Trägerelement (14) eine haftvermittelnde Schicht (32) angeordnet ist.

13. Verfahren nach Anspruch 12, **dadurch gekennzeichnet, dass** die zweite Klebefläche (20) von einem Acrylatklebstoff gebildet wird.

14. Verfahren nach einem der Ansprüche 12 oder 13, **dadurch gekennzeichnet, dass** das Klebeband (24) zwischen den selbstklebenden Klebeflächen (18, 20) mit einem Trägerelement (14) versehen wird.

15. Verfahren nach Anspruch 14, **dadurch gekennzeichnet, dass** das Trägerelement (14) von einem Acrylat-Schaum oder einem flexiblen Band gebildet wird.

16. Verfahren nach einem der Ansprüche 14 oder 15, **dadurch gekennzeichnet, dass** der die erste Klebefläche (18) bildende Silikonkleber mit dem Dichtungskörper (12) und dem Trägerelement (14) vernetzt ist.

17. Verfahren nach Anspruch 16, **dadurch gekennzeichnet, dass** der die Klebefläche (18) bildende Silikonkleber durch Temperatur- und/oder Druckeinwirkung vernetzt.

18. Verfahren nach Anspruch 16, **dadurch gekennzeichnet, dass** der die Klebefläche (18) bildende Silikonkleber durch Feuchtigkeitseinwirkung vernetzt.

19. Verfahren nach einem der Ansprüche 12 bis 18, **dadurch gekennzeichnet, dass** sich die Klebefläche (20) im Wesentlichen über die ganze Länge des Dichtungskörpers (12) erstreckt.

20. Verfahren nach einem der Ansprüche 15 bis 19, **dadurch gekennzeichnet, dass** die zweite Klebefläche (20) unmittelbar vom Acrylat-Schaum des Trägerelements (14) gebildet wird.

21. Verfahren zur Herstellung eines Dichtungselementes zur Verwendung in Fahrzeugen, welches einen Dichtungskörper (12), bestehend aus Silikon, umfasst, **gekennzeichnet durch** die folgenden Verfahrensschritte:
a) Extrusion des Dichtungskörpers (12),
b) Aufbringen des eine erste Klebefläche (18) bildenden Silikonklebers auf eine haftvermittelnde Schicht (32) eines Trägerelements (14) eines doppelseitigen Klebebands (24),
c) Verbinden des Dichtungskörpers (12) mit der Klebefläche (18) des doppelseitigen Klebebandes (24),
d) Vernetzung des die Klebefläche (18) bildenden Silikonklebers **durch** Temperatur- und/oder Druckeinwirkung.

22. Verfahren nach Anspruch 21, **dadurch gekennzeichnet, dass** das Trägerelement (14) aus einem Acrylat-Schaum mit einer Schutzfolie (22) an der Unterseite hergestellt ist.

23. Verfahren nach Anspruch 21 oder 22, **dadurch gekennzeichnet, dass** die haftvermittelnden Schicht (32) von einem auf das Trägerelement (14) aufgebrachten Primer gebildet wird.

24. Verfahren nach Anspruch 21 oder 22, **dadurch gekennzeichnet, dass** die haftvermittelnden Schicht (32) von einem auf das Trägerelement (14) aufgebrachten Lack gebildet wird.

25. Verfahren nach Anspruch 21 oder 22, **dadurch gekennzeichnet, dass** die haftvermitteinden Schicht (32) von einem auf das Trägerelement (14) aufgebrachten Klebstoff gebildet wird.

26. Verfahren nach Anspruch 21 oder 22, **dadurch gekennzeichnet, dass** die haftvermittelnden Schicht (32) von einer auf das Trägerelement (14) aufgebrachten Folie gebildet wird.

27. Verfahren nach Anspruch 21 oder 22, **dadurch gekennzeichnet, dass** die haftvermittelnden Schicht (32) von einem auf das Trägerelement (14) aufgebrachten, vorzugsweise auflaminierten Gewebeband gebildet wird.

28. Verfahren nach Anspruch 21 oder 22, **dadurch gekennzeichnet, dass** die haftvermittelnden Schicht (32) von einer mittels einer Korona-Behandlung behandelten Oberfläche am Trägerelement (14) gebildet wird.

## Claims

1. Adhesive tape (24) for fixing a sealing element (10) at a point of use, having a carrier element (14) arranged between two self-adhesive surfaces (18, 20), the sealing element (10) consisting of a silicone material and the adhesive surface (18) facing the sealing element (10) being formed at least partly by a silicone adhesive, **characterized in that** an adhesion-promoting layer (32) is arranged between this adhesive surface (18) and the carrier element (14).

2. Adhesive tape according to Claim 1, **characterized in that** the silicone adhesive is a cross-linking silicone adhesive.

3. Adhesive tape according to Claim 1 or 2, **characterized in that** the adhesive surface (18) having the silicone adhesive has subregions with a different adhesive.

4. Adhesive tape according to one of the preceding claims, **characterized in that** the carrier element (14) is formed by an acrylic foam.

5. Adhesive tape according to Claim 4, **characterized in that** the acrylic foam of the carrier element (14) forms the second adhesive surface (20) facing the point of use.

6. Adhesive tape according to one of the preceding claims, **characterized in that** the adhesion-promoting layer (32) is formed by a primer.

7. Adhesive tape according to one of Claims 1 to 5, **characterized in that** the adhesion-promoting layer (32) is formed by a film.

8. Adhesive tape according to one of Claims 1 to 5, **characterized in that** the adhesion-promoting layer (32) is formed by a varnish.

9. Adhesive tape according to one of Claims 1 to 5, **characterized in that** the adhesion-promoting layer (32) is formed by another adhesive.

10. Adhesive tape according to one of Claims 1 to 5, **characterized in that** the adhesion-promoting layer (32) is formed by a fabric tape laminated onto the carrier element (14).

11. Adhesive tape according to one of Claims 1 to 5, **characterized in that** the adhesion-promoting layer (32) can be produced by a surface of the carrier element (14) treated by means of corona treatment.

12. Method for fixing a sealing element (10) for use in vehicles, which sealing element comprises a sealing body (12) consisting of silicone, the sealing element (10), which has the sealing body (12) joined to a first adhesive surface (18), having a silicone adhesive, of a double-sided adhesive tape (24), after a protective film (22) has been pulled off, being fixed at the point of use with a second self-adhesive surface (20) of the double-sided adhesive tape (24), an adhesion-promoting layer (32) being arranged between the first adhesive surface (18) and a carrier element (14) arranged between the two adhesive surfaces.

13. Method according to Claim 12, **characterized in that** the second adhesive surface (20) is formed by an acrylic adhesive.

14. Method according to either of Claims 12 and 13, **characterized in that** the adhesive tape (24) is provided with a carrier element (14) between the self-adhesive surfaces (18, 20).

15. Method according to Claim 14, **characterized in that** the carrier element (14) is formed from an acrylic foam or a flexible tape.

16. Method according to either of Claims of 14 and 15, **characterized in that** the silicone adhesive forming the first adhesive surface (18) is cross-linked with the sealing body (12) and the carrier element (14).

17. Method according to Claim 16, **characterized in that** the silicone adhesive forming the adhesive surface (18) cross-links as a result of the action of temperature and/or pressure.

18. Method according to Claim 16, **characterized in that** the silicone adhesive forming the adhesive surface (19) cross-links as a result of the action of moisture.

19. Method according to one of Claims 12 to 18, **characterized in that** the adhesive surface (20) extends substantially over the entire length of the sealing body (12).

20. Method according to one of Claims 15 to 19, **characterized in that** the second adhesive surface (20) is formed directly by the acrylic foam of the carrier element (14) .

21. Method for producing a sealing element for use in vehicles, which comprises a sealing body (12) consisting of silicone, **characterized by** the following method steps:
a) extruding the sealing body (12),
b) applying the silicone adhesive forming a first adhesive surface (18) to an adhesion-promoting layer (32) of a carrier element (14) of a double-sided adhesive tape (24),
c) joining the sealing body (12) to the adhesive surface (18) of the double-sided adhesive tape (24),
d) cross-linking the silicone adhesive forming the adhesive surface (18) by the action of temperature and/or pressure.

22. Method according to Claim 21, **characterized in that** the carrier element (14) is produced from an acrylic foam with a protective film (22) on the underside.

23. Method according to Claim 21 or 22, **characterized in that** the adhesion-promoting layer (32) is formed by a primer applied to the carrier element (14).

24. Method according to Claim 21 or 22, **characterized in that** the adhesion-promoting layer (32) is formed by a varnish applied to the carrier element (14).

25. Method according to Claim 21 or 22, **characterized in that** the adhesion-promoting layer (32) is formed by an adhesive applied to the carrier element (14).

26. Method according to Claim 21 or 22, **characterized in that** the adhesion-promoting layer (32) is formed by a film applied to the carrier element (14).

27. Method according to Claim 21 or 22, **characterized in that** the adhesion-promoting layer (32) is formed by a fabric tape applied to the carrier element (14), preferably laminated on.

28. Method according to Claim 21 or 22, **characterized in that** the adhesion-promoting layer (32) is formed by a surface on the carrier element (14) treated by means of a corona treatment.

## Revendications

1. Bande adhésive (24) pour fixation d'un élément d'étanchéité (10) sur un emplacement d'utilisation, avec un élément support (M) agencé entre deux surfaces adhésives autocollantes (18, 20), l'élément d'étanchéité (10) se composant d'un matériau silicone et la surface adhésive (18) tournée vers l'élément d'étanchéité (10) étant formée au moins partiellement par une colle de silicone, **caractérisée en ce qu'**une couche procurant l'adhérence (32) est agencée entre cette surface adhésive (18) et l'élément support (14).

2. Bande adhésive selon la revendication 1, **caractérisée en ce que** la colle de silicone est une colle de silicone à réticulation.

3. Bande adhésive selon la revendication 1 ou 2, **caractérisée en ce que** la surface adhésive (18) présentant la colle de silicone présente des zones partielles avec une autre colle.

4. Bande adhésive selon l'une quelconque des revendications précédentes, **caractérisée en ce que** l'élément support (14) est formé par une mousse acrylique.

5. Bande adhésive selon la revendication 4, **caractérisée en ce que** la mousse acrylique de l'élément support (14) forme la seconde surface adhésive (20) tournée vers l'emplacement d'utilisation.

6. Bande adhésive selon l'une quelconque des revendications précédentes, **caractérisée en ce que** la couche procurant l'adhérence (32) est formée par une couche de fond.

7. Bande adhésive selon l'une quelconque des revendications 1 à 5, **caractérisée en ce que** la couche procurant l'adhérence (32) est formée par un film.

8. Bande adhésive selon l'une quelconque des revendications 1 à 5, **caractérisée en ce que** la couche procurant l'adhérence (32) est formée par une laque.

9. Bande adhésive selon l'une quelconque des revendications 1 à 5, **caractérisée en ce que** la couche procurant l'adhérence (32) est formée par une autre matière adhésive.

10. Bande adhésive selon l'une quelconque des revendications 1 à 5, **caractérisée en ce que** la couche procurant l'adhérence (32) est formée par une bande de tissu laminée sur l'élément support (14).

11. Bande adhésive selon l'une quelconque des revendications 1 à 5, **caractérisée en ce que** la couche procurant l'adhérence (32) peut être fabriquée grâce à une surface de l'élément support (14) traitée au moyen d'un traitement en couronne.

12. Procédé destiné à la fixation d'un élément d'étanchéité (10) en vue de l'utilisation dans des véhicules, ledit élément d'étanchéité comprenant un corps d'étanchéité (12), se composant de silicone, l'élément d'étanchéité (10), lequel présente le corps d'étanchéité (12), assemblé avec une première surface adhésive (18) d'une bande adhésive bilatérale (24) présentant une colle de silicone, étant fixé après retrait d'un film protecteur (22) avec une seconde surface adhésive autocollante (20) de la bande adhésive bilatérale (24) sur l'emplacement d'utilisation, une couche procurant l'adhérence (32) étant agencée entre la première surface adhésive (18) et un élément support (14) agencé entre les deux surfaces adhésives.

13. Procédé selon la revendication 12, **caractérisé en ce que** la seconde surface adhésive (20) est formée par une colle acrylique.

14. Procédé selon la revendication 12 ou 13, **caractérisé en ce que** la bande adhésive (24) est munie d'un élément support (14) entre les surfaces adhésives autocollantes (18, 20).

15. Procédé selon la revendication 14, **caractérisé en ce que** l'élément support (14) est formé par une mousse acrylique ou une bande flexible.

16. Procédé selon la revendication 14 ou 15, **caractérisé en ce que** la colle de silicone formant la première surface adhésive (18) est réticulée avec le corps d'étanchéité (12) et l'élément support (14).

17. Procédé selon la revendication 16, **caractérisé en ce que** la colle de silicone formant la surface adhésive (18) réticule sous l'influence de la température et/ou de la pression.

18. Procédé selon la revendication 16, **caractérisé en ce que** la colle de silicone formant la surface adhésive (18) réticule sous l'influence de l'humidité.

19. Procédé selon l'une quelconque des revendications 12 à 18, **caractérisé en ce que** la surface adhésive (20) s'étend pour l'essentiel sur toute la longueur du corps d'étanchéité (12).

20. Procédé selon l'une quelconque des revendications 15 à 19, **caractérisé en ce que** la seconde surface adhésive (20) est formée directement par la mousse acrylique de l'élément support (14).

21. Procédé de fabrication d'un élément d'étanchéité en vue de l'utilisation dans des véhicules, lequel comprend un corps d'étanchéité (12) se composant de silicone, **caractérisé par** les étapes de procédé suivantes :
a) Extrusion du corps d'étanchéité (12),
b) Application de la colle de silicone formant une première surface adhésive (18) sur une couche procurant l'adhérence (32) d'un élément support (14) d'une bande adhésive bilatérale (24),
c) Assemblage du corps d'étanchéité (12) avec la surface adhésive (18) de la bande adhésive bilatérale (24),
d) Réticulation de la colle de silicone formant la surface adhésive (18) sous l'influence de la température et/ou de la pression.

22. Procédé selon la revendication 21, **caractérisé en ce que** l'élément support (14) est fabriqué à partir d'une mousse acrylique avec un film de protection (22) sur la face inférieure.

23. Procédé selon la revendication 21 ou 22, **caractérisé en ce que** la couche procurant l'adhérence (32) est formée par une couche de fond appliquée sur l'élément support (14).

24. Procédé selon la revendication 21 ou 22, **caractérisé en ce que** la couche procurant l'adhérence (32) est formée par une laque appliquée sur l'élément support (14).

25. Procédé selon la revendication 21 ou 22, **caractérisé en ce que** la couche procurant l'adhérence (32) est formée par une matière adhésive appliquée sur l'élément support (14).

26. Procédé selon la revendication 21 ou 22, **caractérisé en ce que** la couche procurant l'adhérence (32) est formée par un film appliqué sur l'élément support (14).

27. Procédé selon la revendication 21 ou 22, **caractérisé en ce que** la couche procurant l'adhérence (32) est formée par une bande de tissu appliquée, de préférence laminée sur l'élément support (14).

28. Procédé selon la revendication 21 ou 22, **caractérisé en ce que** la couche procurant l'adhérence (32) est formée par une surface au niveau de l'élément support (14) traitée au moyen d'un traitement en couronne.
